# EUROPEAN PATENT SPECIFICATION

(11) **EP 4 556 297 B1**
(45) Date of publication and mention of the grant of the patent: **20.05.2026**
(21) Application number: 24164756.9
(22) Date of filing: 20.03.2024
(51) Int. Cl.: B60L 50/64, H01M 10/04, H01M 50/204, H01M 50/209

(54) **BATTERY BOX**
BATTERIEKASTEN
BOÎTIER DE BATTERIE

(30) Priority: 15.11.2023 TW 112143986
(43) Date of publication of application: 21.05.2025
(73) Proprietor: Industrial Technology Research Institute, 310401 Hsinchu (TW)
(72) Inventor: YEH, Sheng-Fa, Miaoli County, R.O.C. (TW)
(74) Representative: dompatent

(56) References cited:
- DE-A1- 102018 103 305
- DE-A1- 102019 007 748
- US-A1- 2022 271 326

## Description

### Technical Field

The disclosure relates to an electricity storage device, more particularly to a battery box.

### Background

Due to the property of having high capacity, some manufactures replace the lithium-ion battery used as a power source of a vehicle, such as electric scooter or electric motorcycle, by the lithium-metal battery. In order to allow the lithium-metal battery to have good electrical characteristics, a stress or force should be applied to the lithium-metal battery when charging or discharging electricity therefrom, thereby allowing the lithium metal layer deposited on the surface of the anode to have fine and smooth surface.

However, conventional means for applying stress or force is unable to allow the same to be uniformly transferred to the lithium-metal battery, and thus there is still a part of the lithium metal layer deposited on the surface of the anode does not have fine and smooth surface. In this way, the lithium-metal battery will have poor electrical characteristics. Alternatively, in a housing accommodating the lithium-metal battery, conventional means for applying stress or force occupy significant inner space for the arrangement of the lithium-metal battery, thereby restricting the number of lithium-metal battery.
"DE 10 2018 103305 A1" discloses a method involving an actuator for exerting pressure on a cell (closest prior art).

### SUMMARY

The subject-matter of the invention is defined by independent claim 1.

The disclosure is to provide a battery box that can uniformly transfer the stress or the force to the battery pack or to provide a battery box with more battery cells.

One embodiment of this disclosure provides a battery box, configured to accommodate a battery pack, and including a housing, at least one pushing assembly and a cylinder. The housing is configured to accommodate the battery pack. The at least one pushing assembly includes a pushing plate and a pushed plate. The pushing plate is configured to be stacked on one side of the battery pack. The pushed plate is configured to be stacked on one side of the pushing plate that is located farthest away from the battery pack. The pushed plate includes a frame part and a plurality of rib parts. The plurality of rib parts are connected to the frame part and are surrounded by the frame part. The cylinder is disposed in the housing and configured to push the pushed plate.

Another embodiment of this disclosure provides a battery box configured to accommodate a battery pack. The battery pack includes a plurality of battery cells stacked along a stacking direction. The battery box includes a housing, at least one cylinder and at least one transmission assembly. The at least one cylinder includes a cylinder body and a movable rod. The cylinder body is disposed in the housing. The movable rod is movably disposed at the cylinder body along a moving direction. The at least one transmission assembly is configured to connect the movable rod of the at least one cylinder and the battery pack. The movable rod is configured to apply a driving force to the at least one transmission assembly to make the movable rod pushing the battery pack via the at least one transmission assembly. The moving direction is non-parallel to the stacking direction.

According to the battery box disclosed by above embodiments, in the pushing assembly, the rib parts having, for example, square cross-section is connected to the frame part and surrounded by the frame part. Thus, the cylinder is allowed to uniformly transfer the stress or the force to the battery pack via the pushing assembly, thereby allowing the battery pack to have good electrical characteristics. Alternatively, Since the moving direction of the movable rod is non-parallel to the stacking direction of the battery cells, less space is occupied by the cylinder along the stacking direction. In this way, more battery cells are allowed to be disposed in the housing.

### BRIEF DESCRIPTION OF THE DRAWINGS

The present disclosure will become better understood from the detailed description given herein below and the accompanying drawings which are given by way of illustration only and thus are not intending to limit the present disclosure and wherein:
FIG. 1 is a perspective exploded view of a battery module according to a first embodiment of the disclosure;
FIG. 2 is a side cross-sectional view of the battery module in FIG. 1;
FIG. 3 is a perspective view of the battery module in FIG. 1 omitting a housing and a circuit board assembly;
FIG. 4 is an exploded view of the battery module in FIG. 1 omitting the housing and the circuit board assembly;
FIG. 5 is a perspective exploded view of a battery module according to a second embodiment of the disclosure;
FIG. 6 is a side cross-sectional view of the battery module in FIG. 5;
FIG. 7 is a perspective view of the battery module in FIG. 5 omitting a housing and a circuit board assembly;
FIG. 8 is a perspective exploded view of a battery module according to a third embodiment of the disclosure;
FIG. 9 is a perspective exploded view of the battery module in FIG. 8 omitting a housing and a circuit board assembly; and
FIG. 10 is a side cross-sectional view of a battery module according to a fourth embodiment of the disclosure.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

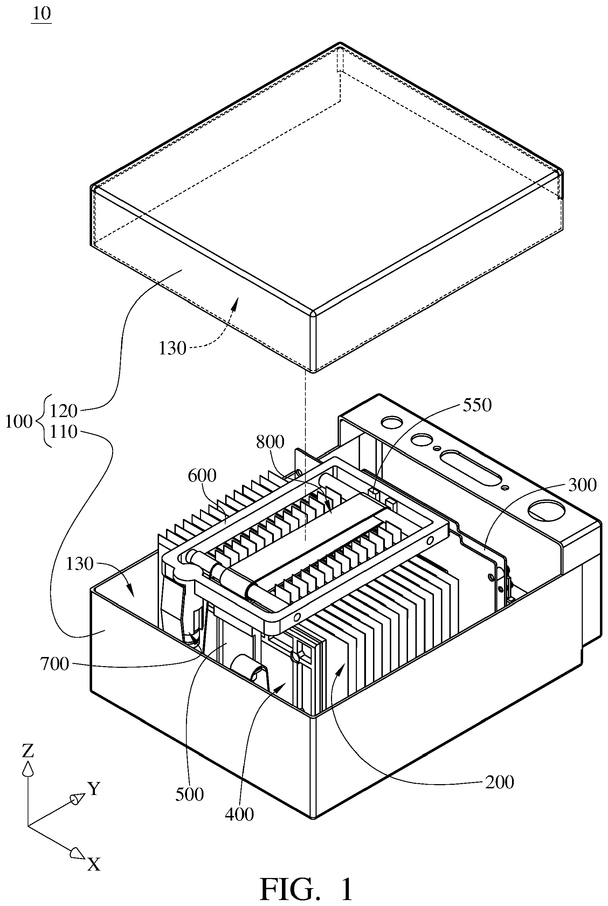

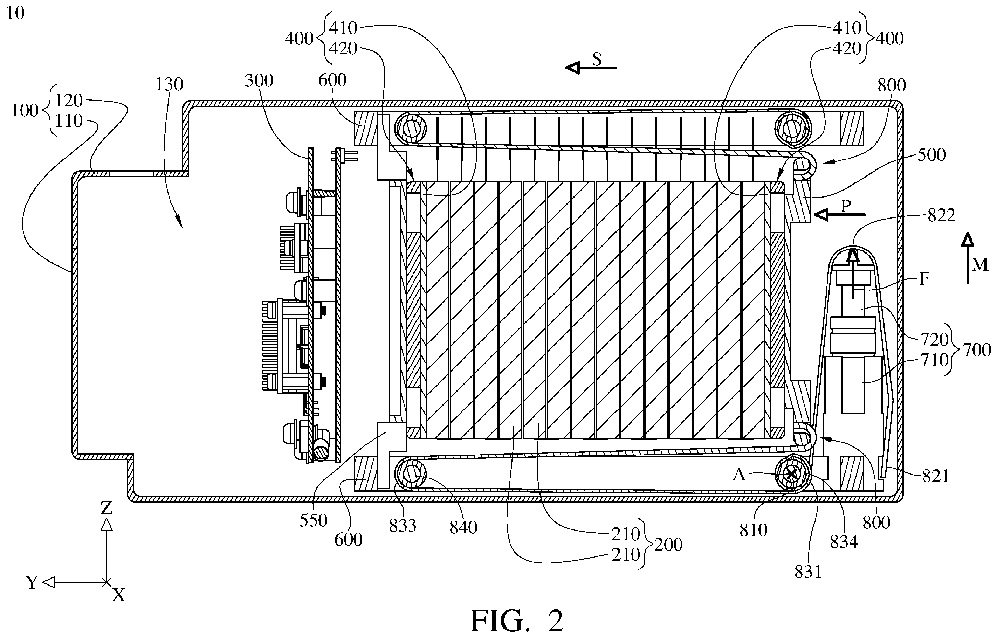

Please refer to FIGS. 1 and 2. FIG. 1 is a perspective exploded view of a battery module 10 according to a first embodiment of the disclosure. FIG. 2 is a side cross-sectional view of the battery module 10 in FIG. 1.

In this embodiment, the battery module 10 is, for example, a lithium-metal battery module. The battery module 10 includes a housing 100, a battery pack 200, a circuit board assembly 300, two pushing assemblies 400, two connecting plates 500 and 550, two mounting frames 600, two cylinders 700 and two transmission assemblies 800. The housing 100, the two pushing assemblies 400, the two connecting plates 500 and 550, the two mounting frames 600, the two cylinders 700 and the two transmission assemblies 800 may together configure a battery box. The said battery box is configured to accommodate the battery pack 200 and configures the battery module 10 together with the battery pack 200.

In this embodiment, the housing 100 may include a first housing part 110 and a second housing part 120. The first housing part 110 is stacked on a side of the second housing part 120, and the first housing part 110 and the second housing part 120 together form an accommodation space 130 therebetween. The disclosure is not limited by the configuration of the housing 100. In other embodiments, the housing may be formed as a single body instead of including two housing parts that are stacked on each other.

The battery pack 200 includes a plurality of battery cells 210. The battery cells 210 may be stacked along a stacking direction S and disposed in the accommodation space 130 of the housing 100. The circuit board assembly 300 is, for example, a Battery Management System (BMS). The circuit board assembly 300 is disposed in the accommodation space 130 of the housing 100, and is electrically connected to the battery cells 210.

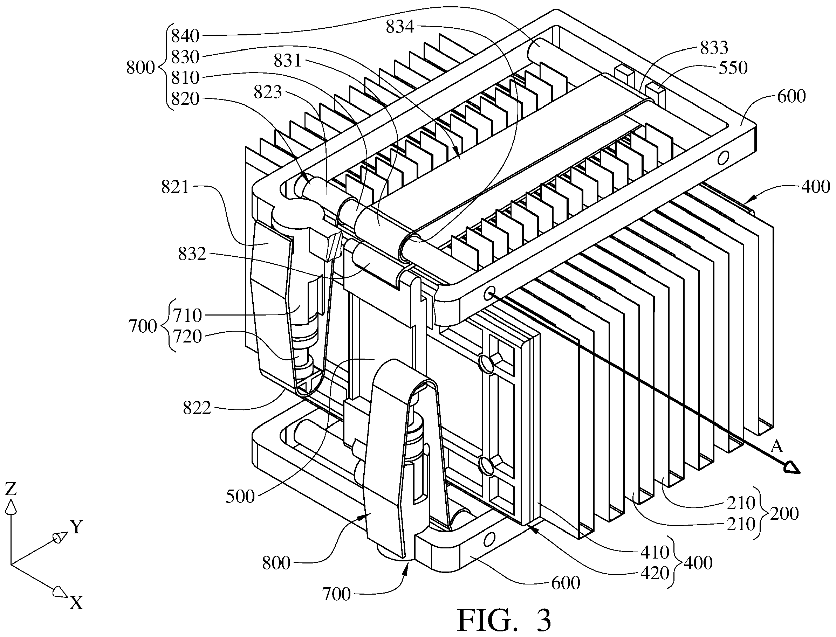

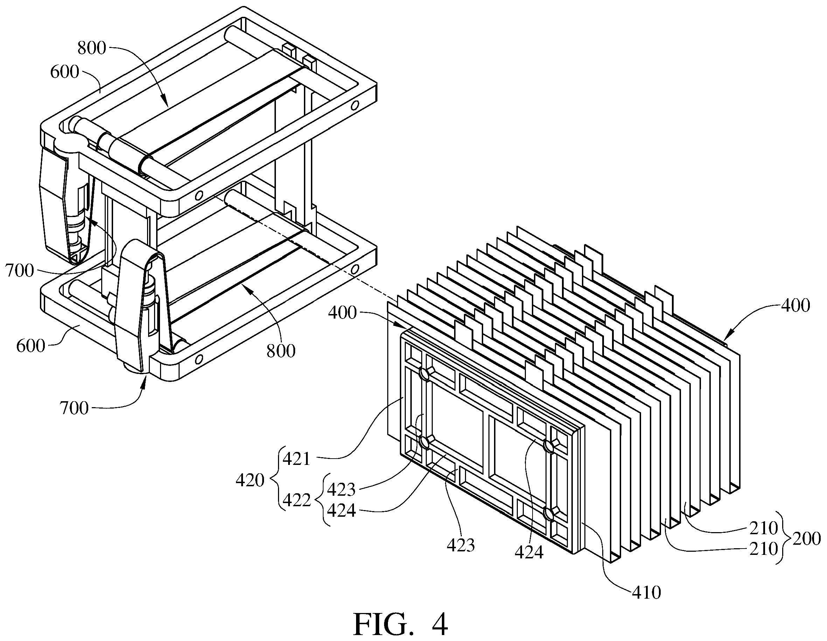

Please refer to FIGS. 2 to 4. FIG. 3 is a perspective view of the battery module 10 in FIG. 1 omitting the housing 100 and the circuit board assembly 300. FIG. 4 is an exploded view of the battery module 10 in FIG. 1 omitting the housing 100 and the circuit board assembly 300.

The two pushing assemblies 400 are similar in structure. Thus, one of the two pushing assemblies 400 will be described in detail hereinafter. The pushing assembly 400 includes a pushing plate 410 and a pushed plate 420. The pushing plate 410 is stacked on one side of the battery pack 200. The pushed plate 420 is stacked on one side of the pushing plate 410 that is located farthest away from the battery pack 200. In this embodiment, the pushed plate 420 includes a frame part 421 and a plurality of rib parts 422. The rib parts 422 are connected to the frame part 421, and are surrounded by the frame part 421. Each rib part 422 may have a square cross-section. In this embodiment, the pushed plate 420 is fixed to the pushing plate 410 by, for example, adhering, but the disclosure is not limited thereto. In other embodiments, the pushed plate and the pushing plate may be integrally formed as a single piece. In addition, in other embodiments, the cross section of each rib part may be in a circular shape or any other shapes that allowing the stress or force to be uniformly transferred from the pushed plate to the pushing plate.

Moreover, as shown in FIG. 4, the rib parts 422 include a plurality of first rib parts 423 and a plurality of second rib parts 424. The first rib parts 423 and the second rib parts 424 are connected to one another. Also, the first rib parts 423 are perpendicular to the second rib parts 424. That is, an extension direction of each first rib part 423 is perpendicular to an extension direction of each second rib part 424. The first rib parts 423 and the second rib parts 424 are connected to the frame part 421, and are surrounded by the frame part 421. In other embodiments, the rib parts may include one first rib part and one second rib part so that the first rib part and the second rib part are together in a cross shape.

Furthermore, as shown in FIG. 2, the two pushing plates 410 of the two pushing assemblies 400 are stacked on two opposite sides of the battery pack 200, respectively. The two connecting plates 500 and 550 rest on sides of the two pushed plates 420 that are located farthest away from the pushing plate 410, respectively.

The two mounting frames 600 are located in the accommodation space 130 of the housing 100. The two mounting frames 600 are spaced apart from each other, and are fixed to the housing 100. The connecting plate 550 rests on the two mounting frames 600.

The two cylinders 700 and the two transmission assemblies 800 are disposed on the two mounting frames 600, respectively. Also, the two cylinders 700 are configured to pull the two connecting plates 500 and 550 via the two transmission assemblies 800, respectively. Thus, the two connecting plates 500 and 550 are configured to force the two pushing assemblies 400 to push the battery pack 200, respectively. Hereinafter, the detail structure and the connection relationship of a pair of the cylinder 700 and transmission assembly 800 that are corresponding to each other will be mainly described for brevity.

The cylinder 700 is, for example, a pneumatic cylinder. The cylinder 700 includes a cylinder body 710 and a movable rod 720. The cylinder body 710 is fixed to the mounting frame 600 and disposed in the housing 100. The movable rod 720 is movably disposed at the cylinder body 710 along a moving direction M. In this embodiment, the moving direction M is non-parallel to the stacking direction S of the battery cells 210. Further, the moving direction M is, for example, perpendicular to the stacking direction S of the battery cells 210. The disclosure is not limited by the type of the cylinder 700. In other embodiments, the cylinder may be a hydraulic cylinder.

Since the moving direction M is non-parallel to the stacking direction S of the battery cells 210, less space is occupied by the cylinder 700 along the stacking direction S. In this way, more battery cells 210 are allowed to be disposed in the accommodation space 130 of the housing 100, thereby increasing the total capacity of the battery module 10; alternatively, the volume of the battery box may be reduced without decreasing the number of the battery cells 210, thereby improving the flexibility for using the battery box.

In addition, in this embodiment, the two cylinders 700 are, for example, misaligned with each other. Thus, the space utilization of the accommodation space 130 of the housing 100 is improved.

In this embodiment, the transmission assemblies 800 includes a first roller 810, a first transmission belt 820, a second transmission belt 830 and a second roller 840.

The first roller 810 is rotatably disposed on the mounting frames 600. The first transmission belt 820 connects the movable rod 720 and the first roller 810. Specifically, the first transmission belt 820 includes a fixed portion 821, a pushed portion 822 and a sleeve portion 823. The pushed portion 822 connects the fixed portion 821 and the sleeve portion 823. The fixed portion 821 is fixed to the housing 100. The sleeve portion 823 is sleeved or wound on the first roller 810. The pushed portion 822 is connected to the movable rod 720, and is configured to be pushed by the movable rod 720. An axial direction A of the first roller 810 is non-parallel to the moving direction M and the stacking direction S. Further, as shown in FIG. 2, the axial direction A, the stacking direction S and the moving direction M are parallel to X-axis direction, Y-axis direction and Z-axis direction, respectively. That is, the axial direction A is, for example, perpendicular to the moving direction M and the stacking direction S. Thus, the first roller 810 is configured to change the direction of the stress or force transferred from the movable rod 720.

The second transmission belt 830 is spaced apart from the first transmission belt 820 along the axial direction A of the first roller 810. The second transmission belt 830 includes a first fixed portion 831, a second fixed portion 832 and a wound portion 833. The wound portion 833 connects the first fixed portion 831 and the second fixed portion 832. The first fixed portion 831 is fixed to the first roller 810. As shown in FIG. 3, the second fixed portion 832 is fixed to the connecting plate 500. In FIG. 3, in order to clearly show the relationship between the second fixed portion 832 and the connecting plate 500, a part of the mounting frame 600 is omitted.

In this embodiment, the second transmission belt 830 further includes a pre-wound portion 834. The pre-wound portion 834 is connected to an end of the first fixed portion 831 that is located farthest away from the wound portion 833, and is wound on the first roller 810.

The second roller 840 is rotatably disposed on the mounting frames 600, and is spaced apart from the first roller 810. The wound portion 833 is sleeved or wound on the second roller 840, and the wound portion 833 and the second roller 840 configured a labor-saving structure similar to a movable pulley.

As shown in FIGS. 3 and 4, the two movable rods 720 of the two cylinders 700 are connected to the two first transmission belts 820 of the two transmission assemblies 800, respectively. The two second fixed portions 832 of the two second transmission belts 830 are fixed to two opposite sides of the connecting plate 500, respectively. Thus, the connecting plate 500 is allowed to push the pushed plate 420 in a uniform manner.

As shown in FIGS. 2 to 4, the cylinder body 710 is configured to drive the movable rod 720 to come out of the cylinder body 710 so that the movable rod 720 applies a driving force F to the pushed portion 822 of the first transmission belt 820. The pushed portion 822 forces the sleeve portion 823 to rotate the first roller 810. The rotation of the first roller 810 moves the first fixed portion 831 of the second transmission belt 830, and thus the first fixed portion 831 forces the second fixed portion 832 to pull the connecting plate 500 along a pushing direction P via the wound portion 833. Accordingly, the connecting plate 500 pushes the battery pack 200 via the pushing assembly 400 along the pushing direction P to apply a stress or force to the battery pack 200. When the battery pack 200 expands or contracts along the stacking direction S during the charge or discharge thereof, the force or stress applied from the cylinder body 710 to the movable rod 720 may be adjusted, so as to adjust the driving force F applied from the movable rod 720 to the pushed portion 822, thereby allowing a constant stress or force to be applied to the battery pack 200.

In the pushing assembly 400, the rib parts 422 having, for example, square cross-section are connected to the frame part 421 and surrounded by the frame part 421. Thus, the cylinder 700 is allowed to uniformly transfer the stress or the force to the battery pack 200 via the pushing assembly 400, thereby allowing the battery pack 200 to have good electrical characteristics.

In addition, the first fixed portion 831 moves the second fixed portion 832 via the wound portion 833 sleeved or wound on the second roller 840. Thus, the wound portion 833 pulls the connecting plate 500 along the pushing direction P by a labor-saving mechanism similar to that of the movable pulley. In this way, the number of the cylinders 700 is allowed to be decreased while providing the desired amount of stress or force applied to the battery pack 200, which reduces the space inside the housing 100 that is occupied by the cylinders 700 and reduces the overall weight of the battery module 10 or the battery box.

When the battery pack 200 expands along the stacking direction S, the pre-wound portion 834 is unwound from the first roller 810 to allow the second transmission belt 830 to be moved with the swelling of the battery pack 200.

The battery module 10 according to the disclosure is not limited to being the lithium-metal battery module. In other embodiments, the battery module may be any types of battery module whose battery pack is required to be pressed or pushed. In addition, in other embodiments, the battery module may include one pushing assembly, one cylinder and one transmission assembly.

Other embodiments are described below for illustrative purposes. The following embodiments use the reference numerals and a part of the contents of the above embodiments, the same reference numerals are used to denote the same or similar elements, and the description of the same technical contents is omitted. For the description of the omitted part, reference may be made to the above embodiments, and details are not described in the following embodiments.

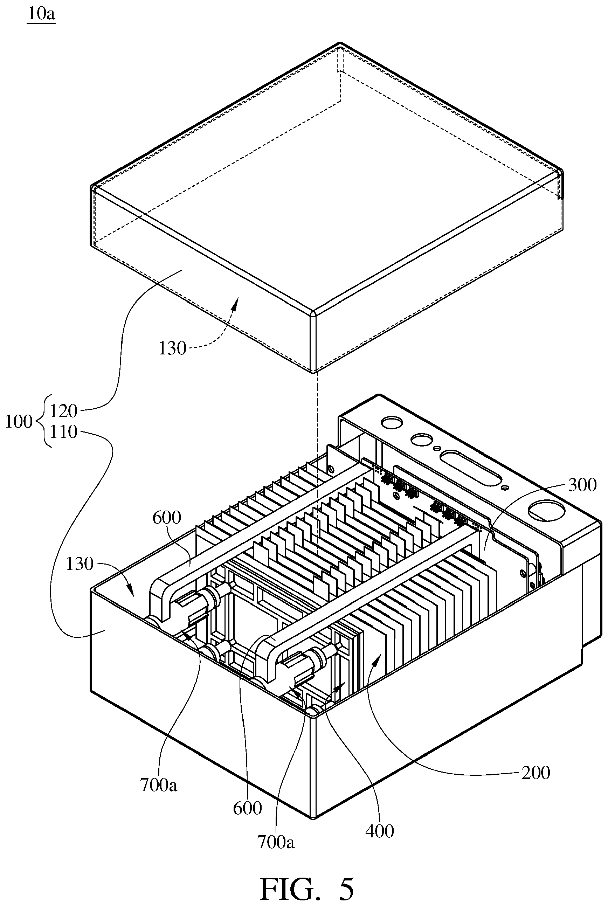

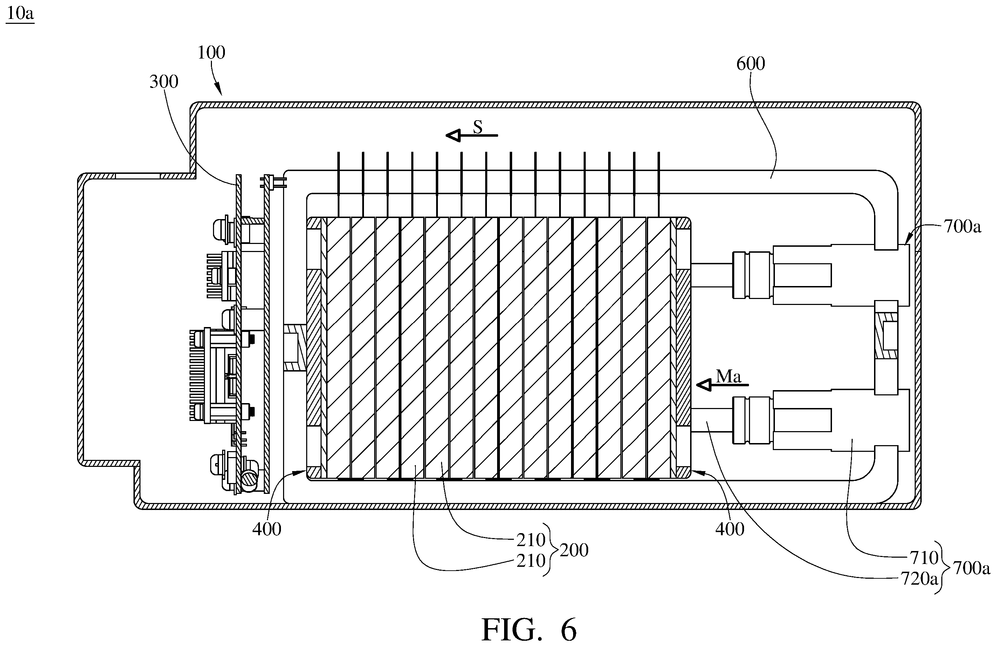

The disclosure is not limited by the relationship between the moving direction of the movable rod and the stacking direction of the battery cells. Please refer to FIGS. 5 and 6. FIG. 5 is a perspective exploded view of a battery module 10a according to a second embodiment of the disclosure. FIG. 6 is a side cross-sectional view of the battery module 10a in FIG. 5. The main difference between the battery module 10a of this embodiment and the battery module 10 of the first embodiment is the moving direction Ma of the movable rod 720a of the cylinders 700a. In this embodiment, the battery module 10a includes the housing 100, the battery pack 200, the circuit board assembly 300, the two pushing assemblies 400, the two mounting frames 600 and four cylinders 700a. The housing 100, the two pushing assemblies 400, the two mounting frames 600 and the four cylinders 700a may together configure a battery box. The said battery box is configured to accommodate the battery pack 200 and configures the battery module 10a together with the battery pack 200.

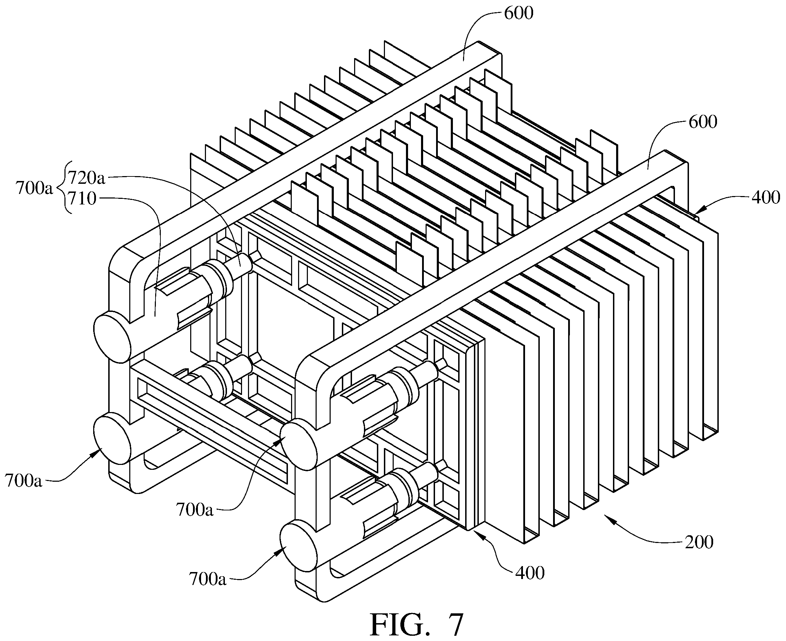

Please refer to FIGS. 6 and 7. FIG. 7 is a perspective view of the battery module 10a in FIG. 5 omitting the housing 100 and the circuit board assembly 300. In this embodiment, the moving direction Ma of the movable rod 720a of each cylinder 700a is parallel to the stacking direction S of the battery cells 210. Thus, in this embodiment, the movable rod 720a of each cylinder 700a is designed to be in direct contact with the pushed plate 420 of the pushing assembly 400. Therefore, comparing to the first embodiment, the battery module 10a is not required to include the connecting plates 500 and 550 and the transmission assemblies 800, thereby simplifying the structure of the battery module 10a and reducing the manufacture cost of the battery module 10a.

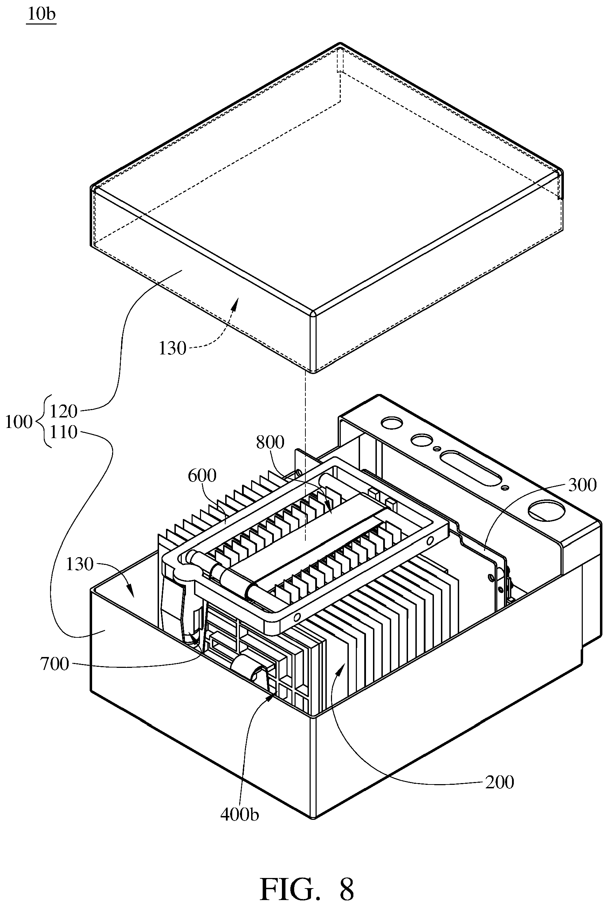

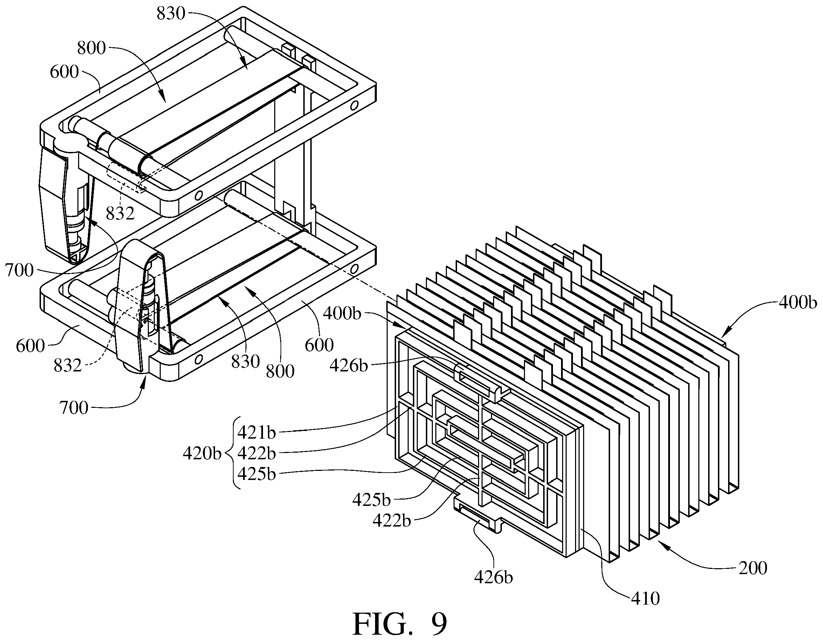

The disclosure is not limited by the structure of the pushed plate. Please refer to FIGS. 8 and 9. FIG. 8 is a perspective exploded view of a battery module 10b according to a third embodiment of the disclosure. FIG. 9 is a perspective exploded view of the battery module 10b in FIG. 8 omitting a housing 100 and a circuit board assembly 300. The main difference between the battery module 10b of this embodiment and the battery module 10 of the first embodiment is the structure of the pushed plate 420b of each pushing assembly 400b. In this embodiment, the pushed plate 420b includes a frame part 421b, a plurality of rib parts 422b and a plurality of peripheral rib parts 425b. The rib parts 422b and the peripheral rib parts 425b may have square cross sections. The rib parts 422b connect the peripheral rib parts 425b and the frame part 421b. The frame part 421b surrounds the rib parts 422b and the peripheral rib parts 425b. The peripheral rib parts 425b are spaced apart from one another. In addition, in this embodiment, the pushed plate 420b has two fixing protrusions 426b respectively on two opposite sides of the pushed plate 420b. The two second fixed portions 832 of the two second transmission belts 830 are fixed to the two fixing protrusions 426b, respectively. In other words, in this embodiment, the connecting plate 500 in the first embodiment used as the structure for fixing the second fixed portion 832 is replaced by the fixing protrusions 426b. The housing 100, the two pushing assemblies 400b, the two mounting frames 600, the two cylinders 700 and the two transmission assemblies 800 may together configure a battery box. The said battery box is configured to accommodate the battery pack 200 and configures the battery module 10b together with the battery pack 200.

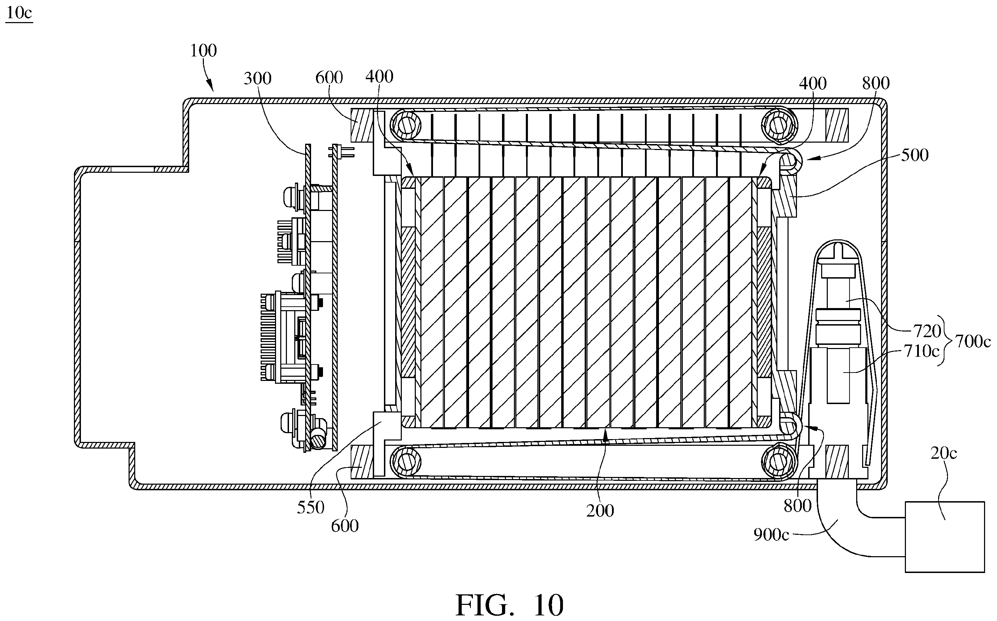

The disclosure is not limited by the way for the cylinders to produce a force or a stress. Please refer to FIG. 10. FIG. 10 is a side cross-sectional view of a battery module 10c according to a fourth embodiment of the disclosure. The main difference between the battery module 10c of this embodiment and the battery module 10 of the first embodiment is in that the cylinder body 710c of the cylinder 700c of this embodiment is in fluid communication with an external container 20c via a tube 900c. In this way, since the configuration of the external container 20c (e.g., such as the volume of the external container 20c) is not limited by the housing 100, the external container 20c is allowed to provide an operation fluid to the cylinder body 710c in a more flexible and stable manner. Thus, the cylinder 700c is allowed to produce a force or a stress in a more flexible and stable manner. Additionally, the battery module 10c includes the housing 100, the battery pack 200, the circuit board assembly 300, the two pushing assemblies 400, the two connecting plates 500 and 550, the two mounting frames 600, two cylinders 700c and the two transmission assemblies 800. The housing 100, the two pushing assemblies 400, the two connecting plates 500 and 550, the two mounting frames 600, two cylinders 700c and the two transmission assemblies 800. The housing 100, the two pushing assemblies 400, the two connecting plates 500 and 550, the two mounting frames 600, the two cylinders 700c and the two transmission assemblies 800 may together configure a battery box. The said battery box is configured to accommodate the battery pack 200 and configures the battery module 10c together with the battery pack 200.

According to the battery box disclosed by above embodiments, in the pushing assembly, the rib parts having, for example, square cross-section is connected to the frame part and surrounded by the frame part. Thus, the cylinder is allowed to uniformly transfer the stress or the force to the battery pack via the pushing assembly, thereby allowing the battery pack to have good electrical characteristics. Alternatively, Since the moving direction of the movable rod is non-parallel to the stacking direction of the battery cells, less space is occupied by the cylinder along the stacking direction. **In** this way, more battery cells are allowed to be disposed in the housing.

It will be apparent to those skilled in the art that various modifications and variations can be made to the disclosed embodiments. It is intended that the specification and examples be considered as exemplary only, with a true scope of the disclosure being indicated by the following claims.

## Claims

1. A battery box system, comprising a battery pack comprising a plurality of battery cells (210) stacked along a stacking direction (S), and a battery box configured to accommodate the battery pack, the battery box comprising; a housing (100);
at least one cylinder (700, 700a, 700b), comprising a cylinder body (710, 710c) and a movable rod (720, 720a), wherein the cylinder body is disposed in the housing, and the movable rod is movably disposed at the cylinder body along a moving direction (M, Ma); and
at least one transmission assembly (800), configured to connect the movable rod of the at least one cylinder and the battery pack, wherein the movable rod is configured to apply a driving force (F) to the at least one transmission assembly to make the movable rod pushing the battery pack via the at least one transmission assembly;
wherein, the moving direction is non-parallel to the stacking direction; **characterized in that** the battery box having at least one cylinder further comprises a pushing assembly (400, 400b), wherein the pushing assembly is configured to be stacked on one side of the battery pack, the at least one transmission assembly comprises a first roller (810), a first transmission belt (820) and a second transmission belt (830), the first roller is rotatably disposed in the housing, the first transmission belt connects the movable rod and the first roller, an axial direction (A) of the first roller is non-parallel to the moving direction and the stacking direction, and the second transmission belt connects the first roller and the pushing assemblies and is spaced apart from the first transmission belt along the axial direction of the first roller.

2. The battery box system according to claim 1, wherein the at least one transmission assembly further comprises a second roller (840), the second roller is rotatably disposed on the housing and is spaced apart from the first roller, the second transmission belt comprises a first fixed portion (831), a second fixed portion (832) and a wound portion (833), the wound portion connects the first fixed portion and the second fixed portion, the first fixed portion and the second fixed portion are connected to the first roller and the pushing assembly, respectively, and the wound portion is wound on the second roller.

3. The battery box system according to claim 2, wherein the second transmission belt further comprises a pre-wound portion (834), and the pre-wound portion is connected to an end of the first fixed portion that is located farthest away from the wound portion and is wound on the first roller.

4. The battery box system according to claim 2, further comprising a connecting plate (500, 550), wherein the connecting plate is configured to rest on one side of the pushing assembly that is located farthest away from the battery pack, and the second fixed portion is fixed to the connecting plate.

5. The battery box system according to claim 4, wherein the at least one cylinder comprises two cylinders and the at least one transmission assembly comprises two transmission assemblies, the movable rods of the two cylinders are connected to the two transmission assemblies, respectively, and the second fixed portions of the second transmission belts of the two transmission assemblies are fixed to two opposite sides of the connecting plates, respectively.

6. The battery box system according to claim 5, wherein the two cylinders are misaligned with each other.

7. The battery box system according to claim 2, wherein the pushing assembly comprises a pushing plate (410) and a pushed plate (420, 420b), the pushing plate is configured to be stacked on one side of the battery pack, the pushed plate is configured to rest on one side of the pushing plate that is located farthest away from the battery pack, the pushed plate has a fixing protrusion (426b), and the second fixed portion is fixed to the fixing protrusion.

8. The battery box system according to claim 1, wherein the at least one cylinder is a pneumatic cylinder.

9. The battery box system according to claim 8, wherein the cylinder body of the at least one cylinder is in fluid communication with an external container (20c) via a tube (900c).

10. The battery box system according to claim 1, wherein the moving direction is perpendicular to the stacking direction.

## Patentansprüche

1. Batteriekastensystem, das ein Batteriepack, das eine Vielzahl von Batteriezellen (210) aufweist, die entlang einer Stapelrichtung (S) gestapelt sind, und einen Batteriekasten aufweist, der so ausgebildet ist, dass er das Batteriepack aufnimmt, wobei der Batteriekasten aufweist:
ein Gehäuse (100);
mindestens einen Zylinder (700, 700a, 700b), der einen Zylinderkörper (710, 710c) und eine bewegbare Stange (720, 720a) aufweist, wobei der Zylinderkörper in dem Gehäuse angeordnet ist und die bewegbare Stange an dem Zylinderkörper entlang einer Bewegungsrichtung (M, Ma) bewegbar angeordnet ist; und
mindestens eine Übertragungsbaugruppe (800), die so ausgebildet ist, dass sie die bewegbare Stange des mindestens einen Zylinders und das Batteriepack verbindet, wobei die bewegbare Stange so ausgebildet ist, dass sie eine Antriebskraft (F) auf die mindestens eine Übertragungsbaugruppe ausübt, damit die bewegbare Stange das Batteriepack über die mindestens eine Übertragungsbaugruppe schiebt;
wobei die Bewegungsrichtung nicht parallel zur Stapelrichtung verläuft;
**dadurch gekennzeichnet, dass** der Batteriekasten, der mindestens einen Zylinder aufweist, ferner eine Schiebebaugruppe (400, 400b) aufweist, wobei die Schiebebaugruppe so ausgebildet ist, dass sie auf einer Seite des Batteriepacks gestapelt wird, wobei die mindestens eine Übertragungsbaugruppe eine erste Rolle (810), einen ersten Übertragungsriemen (820) und einen zweiten Übertragungsriemen (830) aufweist, wobei die erste Rolle drehbar in dem Gehäuse angeordnet ist, der erste Übertragungsriemen die bewegbare Stange und die erste Rolle verbindet, eine axiale Richtung (A) der ersten Rolle nicht parallel zur Bewegungsrichtung und zur Stapelrichtung ist, und der zweite Übertragungsriemen die erste Rolle und die Schiebebaugruppen verbindet und von dem ersten Übertragungsriemen entlang der axialen Richtung der ersten Rolle beabstandet ist.

2. Batteriekastensystem nach Anspruch 1, wobei die mindestens eine Übertragungsbaugruppe ferner eine zweite Rolle (840) aufweist, die zweite Rolle drehbar am Gehäuse angeordnet und von der ersten Rolle beabstandet ist, der zweite Übertragungsriemen einen ersten fixierten Abschnitt (831), einen zweiten fixierten Abschnitt (832) und einen gewickelten Abschnitt (833) aufweist, wobei der gewickelte Abschnitt den ersten fixierten Abschnitt und den zweiten fixierten Abschnitt verbindet, wobei der erste fixierte Abschnitt und der zweite fixierte Abschnitt mit der ersten Rolle bzw. der Schiebebaugruppe verbunden sind und der gewickelte Abschnitt auf die zweite Rolle gewickelt ist.

3. Batteriekastensystem nach Anspruch 2, wobei der zweite Übertragungsriemen ferner einen vorgewickelten Abschnitt (834) aufweist und der vorgewickelte Abschnitt mit einem Ende des ersten fixierten Abschnitts verbunden ist, das am weitesten von dem gewickelten Abschnitt entfernt ist und auf die erste Rolle gewickelt ist.

4. Batteriekastensystem nach Anspruch 2, das ferner eine Verbindungsplatte (500, 550) aufweist, wobei die Verbindungsplatte so ausgebildet ist, dass sie auf einer Seite der Schiebebaugruppe aufliegt, die am weitesten von dem Batteriepack entfernt ist, und der zweite fixierte Abschnitt an der Verbindungsplatte fixiert ist.

5. Batteriekastensystem nach Anspruch 4, wobei der mindestens eine Zylinder zwei Zylinder aufweist und die mindestens eine Übertragungsbaugruppe zwei Übertragungsbaugruppen aufweist, wobei die bewegbaren Stangen der beiden Zylinder jeweils mit den beiden Übertragungsbaugruppen verbunden sind und die zweiten fixierten Abschnitte der zweiten Übertragungsriemen der beiden Übertragungsbaugruppen jeweils an zwei entgegengesetzten Seiten der Verbindungsplatten fixiert sind.

6. Batteriekastensystem nach Anspruch 5, wobei die beiden Zylinder nicht fluchtend ausgerichtet sind.

7. Batteriekastensystem nach Anspruch 2, wobei die Schiebebaugruppe eine Schiebeplatte (410) und eine geschobene Platte (420, 420b) aufweist, die Schiebeplatte so ausgebildet ist, dass sie auf einer Seite des Batteriepacks gestapelt wird, die geschobene Platte so ausgebildet ist, dass sie auf einer Seite der Schiebeplatte aufliegt, die am weitesten von dem Batteriepack entfernt ist, die geschobene Platte einen Fixiervorsprung (426b) aufweist und der zweite fixierte Abschnitt an dem Fixiervorsprung fixiert ist.

8. Batteriekastensystem nach Anspruch 1, wobei der mindestens eine Zylinder ein Pneumatikzylinder ist.

9. Batteriekastensystem nach Anspruch 8, wobei der Zylinderkörper des mindestens einen Zylinders über einen Schlauch (900c) in Fluidverbindung mit einem externen Behälter (20c) steht.

10. Batteriekastensystem nach Anspruch 1, wobei die Bewegungsrichtung senkrecht zur Stapelrichtung verläuft.

## Revendications

1. Système de boîtier de batterie, comprenant un bloc-batterie comprenant une pluralité d'éléments de batterie (210) empilés le long d'une direction d'empilement (S), et un boîtier de batterie configuré pour accueillir le bloc-batterie, le boîtier de batterie comprenant ;
un logement (100) ;
au moins un vérin (700, 700a, 700b), comprenant un corps de vérin (710, 710c) et une tige mobile (720, 720a), dans lequel le corps de vérin est disposé dans le logement, et la tige mobile est disposée de manière mobile au niveau du corps de vérin selon une direction de déplacement (M, Ma) ; et
au moins un ensemble de transmission (800), configuré pour relier la tige mobile de l'au moins un vérin et le bloc-batterie, dans lequel la tige mobile est configurée pour appliquer une force d'entraînement (F) à l'au moins un ensemble de transmission pour que la tige mobile pousse le bloc-batterie via l'au moins un ensemble de transmission ;
dans lequel la direction de déplacement n'est pas parallèle à la direction d'empilement ;
**caractérisé en ce que** le boîtier de batterie présentant au moins un vérin comprend en outre un ensemble de poussée (400, 400b), dans lequel l'ensemble de poussée est configuré pour être empilé sur un côté du bloc-batterie, l'au moins un ensemble de transmission comprend un premier rouleau (810), une première courroie (820) de transmission et une seconde courroie (830) de transmission, le premier rouleau est disposé en rotation dans le logement, la première courroie de transmission relie la tige mobile et le premier rouleau, une direction axiale (A) du premier rouleau n'est pas parallèle à la direction de déplacement et à la direction d'empilement, et la seconde courroie de transmission relie le premier rouleau et les ensembles de poussée et est espacée de la première courroie de transmission le long de la direction axiale du premier rouleau.

2. Système de boîtier de batterie selon la revendication 1, dans lequel l'au moins un ensemble de transmission comprend en outre un second rouleau (840), le second rouleau est disposé en rotation sur le logement et est espacé du premier rouleau, la seconde courroie de transmission comprend une première partie fixe (831), une seconde partie fixe (832) et une partie enroulée (833), la partie enroulée relie la première partie fixe et la seconde partie fixe, la première partie fixe et la seconde partie fixe sont reliées respectivement au premier rouleau et à l'ensemble de poussée, et la partie enroulée est enroulée sur le second rouleau.

3. Système de boîtier de batterie selon la revendication 2, dans lequel la seconde courroie de transmission comprend en outre une partie préenroulée (834), et la partie préenroulée est reliée à une extrémité de la première partie fixe qui est située la plus éloignée de la partie enroulée et est enroulée sur le premier rouleau.

4. Système de boîtier de batterie selon la revendication 2, comprenant en outre une plaque de liaison (500, 550), dans laquelle la plaque de liaison est configurée pour reposer sur un côté de l'ensemble de poussée qui est situé le plus éloigné du bloc-batterie, et la seconde partie fixe est fixée à la plaque de liaison.

5. Système de boîtier de batterie selon la revendication 4, dans lequel l'au moins un vérin comprend deux vérins et l'au moins un ensemble de transmission comprend deux ensembles de transmission, les tiges mobiles des deux vérins sont reliées respectivement aux deux ensembles de transmission, et les secondes parties fixes des secondes courroies de transmission des deux ensembles de transmission sont fixées respectivement à deux côtés opposés des plaques de liaison.

6. Système de boîtier de batterie selon la revendication 5, dans lequel les deux vérins sont désalignés l'un par rapport à l'autre.

7. Système de boîtier de batterie selon la revendication 2, dans lequel l'ensemble de poussée comprend une plaque de poussée (410) et une plaque poussée (420, 420b), la plaque de poussée est configurée pour être empilée sur un côté du bloc-batterie, la plaque poussée est configurée pour reposer sur un côté de la plaque de poussée qui est situé le plus éloigné du bloc-batterie, la plaque de poussée présente une saillie de fixation (426b), et la seconde partie fixe est fixée à la saillie de fixation.

8. Système de boîtier de batterie selon la revendication 1, dans lequel l'au moins un vérin est un vérin pneumatique.

9. Système de boîtier de batterie selon la revendication 8, dans lequel le corps de vérin de l'au moins un vérin est en communication fluidique avec un récipient externe (20c) via un tube (900c).

10. Système de boîtier de batterie selon la revendication 1, dans lequel la direction de déplacement est perpendiculaire à la direction d'empilement.
